# EUROPEAN PATENT APPLICATION

(11) **EP 1 342 557 A1**
(43) Date of publication of application: **10.09.2003**
(21) Application number: 03251188.3
(22) Date of filing: 27.02.2003
(51) Int. Cl.: B29D 11/00, G02B 5/18

(54) **Optical element and method of manufacturing the same**

(30) Priority: 27.02.2002 JP 2002051218; 17.04.2002 JP 2002115528; 30.07.2002 JP 2002221340
(71) Applicant: CANON KABUSHIKI KAISHA, Tokyo (JP)
(72) Inventor: Ukuda, Hideo, Ohta-ku, Tokyo (JP); Ohgane, Masanobu, Ohta-ku, Tokyo (JP)
(74) Representative: Beresford, Keith Denis Lewis

(57) **Abstract**

When a light beam is incident on a diffraction optical element at a large incidence angle, the light beam is shaded to generate flare or ghost, thereby increasing chromatic aberration. To solve this, polyvinylcarbazole is used as an optical element material to form a diffraction optical element in a mold by means of heat molding, solvent evaporation, thermal polymerization, photopolymerization, and the like. In particular, for thermal polymerization and photopolymerization, N-vinylcarbazole, i.e., fluid monomer, is supplied into a mold and is then polymerized. Even if the diffractive structure is complicated and fine, it can be easily shaped. An optical material to be used comprises polyvinylcarbazole added with a thermal initiator, a photoinitiator, a compound having two or more unsaturated ethylene groups with a photoinitiator, and the like.

## Description

### BACKGROUND OF THE INVENTION

### Field of the Invention

The present invention relates to a method of manufacturing optical elements such as a lens, filter, mirror, refraction optical element (dioptic element), and the like, and to an optical element, an optical system, an optical material, and an image-forming apparatus. More specifically, the present invention relates to an optical element using an optical material having a large refractive index dispersion.

### Related Background Art

Conventionally, an optical system comprising a plurality of lenses for refracting a light beam decreases chromatic aberration by combining glass materials with different dispersion characteristics. Objective lenses of a telescope, for example, comprise a positive lens using a small-dispersion glass material and a negative lens using a large-dispersion glass material. These lenses are combined to correct chromatic aberration appearing on an axis. When the lens configuration or the number of lenses is restricted or glass materials to be used are limited, there has been a case where chromatic aberration cannot be corrected fully.

In addition to the method of decreasing chromatic aberration by combining glass materials as mentioned above, there is disclosed a method of decreasing chromatic aberration by providing a diffraction grating to a lens or part of an optical system. For example, the latter method is disclosed in SPIE Vol. 1354 International Lens Design Conference (1990) and the like. In an optical system, it is known that the refraction surface and the diffraction surface cause chromatic aberrations reverse to each other against a light beam having a given reference wavelength. This phenomenon is used to offset both chromatic aberrations and decrease the entire chromatic aberration. Such diffraction optical element can provide the function equivalent to an aspheric lens by continuously changing the cycle of the diffraction grating structure. The use of the lens having such diffraction grating can greatly decrease chromatic aberration.

On a normal refraction surface, one light beam is unchanged to be a single light beam after refraction. By contrast, one light beam is diffracted on a diffraction surface and is separated into a plurality of light beams corresponding to the number of orders. When the diffraction optical element is used as an optical system, the grating structure needs to be determined so that the luminous flux in an available wavelength region concentrates on a designed specific order among the diffracted light beams. When the light beams concentrate on the specific order, diffraction light intensities are low for the other orders. When the intensity is 0, the diffraction light of that order does not exist. On the contrary, when there is a light beam having an order other than the specific order, that light beam forms an image at a different position from the light beam corresponding to the specific order, thereby generating flare. In order to efficiently decrease chromatic aberrations, it is therefore necessary to fully increase the diffraction efficiency of the light beam corresponding to the specific order.

Japanese Patent Application Laid-Open Nos. 9-127321, 9-127322, 11-044808 and 11-044810 disclose configurations to determine the grid structure so that the luminous flux in an available wavelength region concentrates on a specific order. These configurations select a plurality of materials having different dispersions and an optimum thickness of each diffraction grating to provide high diffraction efficiency in a wide wavelength range. More specifically, a plurality of different optical materials are laminated on a substrate. On at least one of the interfaces therebetween, a relief pattern, a step shape, a kinoform, and the like are formed to configure an intended laminated diffraction optical element.

According to aforementioned Japanese Patent Application Laid-Open Nos. 9-127321, 9-127322, 11-044808, and 11-044810, however, there is used a combination of materials having relatively low and high refractive index dispersions in order to obtain the configuration having high diffraction efficiency in a wide wavelength range.

More specifically, Japanese Patent Application Laid-Open No. 9-127321 uses a combination of BMS81 (nd = 1.64, νd = 60.1: manufactured by OHARA) and plastic optical material PC (nd = 1.58, νd = 30.5: manufactured by Teijin Chemicals). Japanese Patent Application Laid-Open No. 9-127322 uses a combination of LaL14 (nd = 1.6968, νd = 55.5: manufactured by OHARA), acrylic resin (nd = 1.49, νd = 57.7), Cytop (nd = 1.34149, νd = 93.8: manufactured by Asahi Glass Co., Ltd.), and PC (nd = 1.58, νd = 30.5: manufactured by Teijin Chemicals). Japanese Patent Application Laid-Open Nos. 11-044808 and 11-044810 use a combination of C001 (nd = 1.5250, νd = 50.8: manufactured by Dainippon Ink & Chemicals, Inc.), plastic optical material PC (nd = 1.58, νd = 30.5: manufactured by Teijin Chemicals), PS (nd = 1.5918, νd = 31.1), PMMA (nd = 1.4917, νd = 57.4), and BMS81 (nd = 1.64, νd = 60.1: manufactured by OHARA).

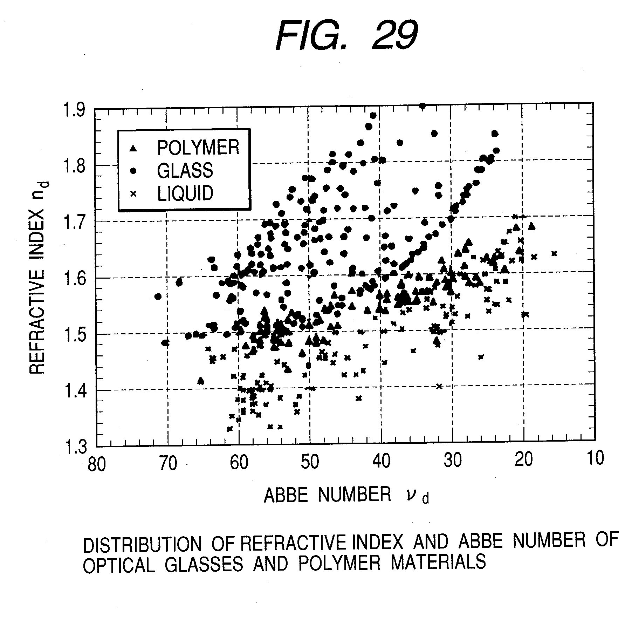

In the diffraction optical element, due to its shape, when the light beam forms a large incidence angle, it is shaded to generate flare or ghost. Hence, in order to decrease the total thickness of the diffraction grating, it is necessary to use a material having a refractive index dispersion much greater than that for conventional optical materials. FIG. 29 is a graph showing Abbe numbers and refractive indexes of optical materials that are commercially available or under research and development. The ordinate axis indicates refractive index (nd), while the abscissa axis indicates Abbe number (νd). Of these materials, it is known that polyvinylcarbazole, among organic polymers, indicates the smallest Abbe number 17.3.

Japanese Patent Application Laid-Open No. 10-268116 describes an example of using polyvinylcarbazole for the laminated diffraction optical element. Japanese Patent Application Laid-Open No. 10-268116 lists in its Table 3 polyvinylcarbazole as an elastic resin. Polyvinylcarbazole, an elastic resin, is pressed against a diffraction grating and is bonded and united to the surface of the diffraction grating through pressure, thus forming a multilayer diffraction grating. Since polyvinylcarbazole is a very fragile material, even a small load can easily crack it. Accordingly, polyvinylcarbazole as an elastic resin needs to be pressed to a diffraction grating for a considerably long time in order to form an optical element as described in Japanese Patent Application Laid-Open No. 10-268116. This is industrially very difficult. In recent years, diffraction gratings have become finely and complexly shaped, making such method much more difficult.

### SUMMARY OF THE INVENTION

It is an object of the present invention to decrease optical losses and suppress chromatic aberration without increasing the diffraction grating thickness and generating flare or ghost even if the incidence angle on an optical element increases. It is another object of the present invention to provide such an optical element by means of an industrially available, easy manufacturing method.

In order to achieve the above-mentioned objects, the present invention provides a method of manufacturing an optical element by supplying polyvinylcarbazole to a mold and forming the optical element through thermoplastic molding.

The present invention provides a method of manufacturing an optical element by supplying a mold with polyvinylcarbazole dissolved in a solvent and evaporating the solvent to form the optical element.

The present invention provides a method of manufacturing an optical element, wherein a material mainly comprising N-vinylcarbazole is supplied to a mold, and is cured in the mold by means of polymerization reaction to convert it into polyvinylcarbazole, thereby forming the optical element.

The present invention provides the above method of manufacturing an optical element, wherein the optical element is a diffraction optical element.

The present invention provides the above method of manufacturing an optical element, wherein the polymerization reaction is thermal polymerization.

The present invention provides the above method of manufacturing an optical element, wherein the material subjected to thermal polymerization reaction contains a thermal initiator.

The present invention provides the above method of manufacturing an optical element, wherein the thermal polymerization is performed through heat treatment at temperature of not lower than 70°C and not higher than 130°C.

The present invention provides the above method of manufacturing an optical element, wherein the polymerization reaction is photopolymerization.

The present invention provides the above method of manufacturing an optical element, wherein the material subjected to photopolymerization reaction contains a photoinitiator.

The present invention provides the above method of manufacturing an optical element, wherein the photoinitiator comprises a radical polymerization initiator capable of generating radical species by means of irradiation of ultraviolet light or visible light.

The present invention provides the above method of manufacturing an optical element, wherein the photoinitiator comprises 1-hydroxycyclohexyl-phenyl-ketone.

The present invention provides the above method of manufacturing an optical element, wherein the optical material contains a compound having two or more unsaturated ethylene groups.

The present invention provides the above method of manufacturing an optical element, wherein the compound having two or more unsaturated ethylene groups is divinylbenzene.

The present invention provides the above method of manufacturing an optical element, wherein the compound having two or more unsaturated ethylene groups is contained at a weight ratio ranging from 0.5 wt% to 2.5 wt%.

The present invention provides an optical element and a method of manufacturing the same by supplying a material mainly comprising fluid N-vinylcarbazole to a mold having a diffractive shape, curing the N-vinylcarbazole in the mold by means of polymerization reaction to convert it into polyvinylcarbazole, and separating the cured polyvinylcarbazole from the mold.

The present invention provides a laminated diffraction optical element and a method of manufacturing the same by supplying a material mainly comprising fluid N-vinylcarbazole to a mold having a diffractive shape, curing the N-vinylcarbazole in the mold by means of polymerization reaction to convert it into polyvinylcarbazole, thereby forming a diffraction optical element, and combining the diffraction optical element with another diffraction optical element so that their diffraction surfaces are opposed to each other.

The present invention provides the above laminated diffraction optical element, wherein the refractive index dispersion of the diffraction optical element is higher than that of the other diffraction optical element.

The present invention provides a laminated diffraction optical element and a method of manufacturing the same by supplying a curable resin to a mold having a diffractive shape, curing the curable resin in the mold, separating the cured resin from the mold to provide a diffraction optical element, supplying a material mainly comprising fluid N-vinylcarbazole to the diffraction optical element, and curing the N-vinylcarbazole in the diffraction optical element by means of polymerization reaction to convert it into polyvinylcarbazole.

The present invention provides a laminated diffraction optical element and a method of manufacturing the same by supplying a curable resin to first and second molds having diffractive shapes, curing the curable resin in the first and second molds, separating the cured resin from the first and second molds to provide first and second diffraction optical elements, arranging the first and second diffraction optical elements with their diffraction surfaces opposed to each other and supplying a material mainly comprising N-vinylcarbazole therebetween, and curing the N-vinylcarbazole in the first and second diffraction optical elements by means of polymerization reaction to convert it into polyvinylcarbazole.

The present invention provides a laminated diffraction optical element and a method of manufacturing the same by supplying a curable resin to a mold having a diffractive shape, curing the curable resin in the mold, separating the cured resin from the mold to provide a diffraction optical element, supplying the diffraction optical element with a material mainly comprising fluid N-vinylcarbazole, and curing the N-vinylcarbazole in the diffraction optical element by means of polymerization reaction to convert it into polyvinylcarbazole so that the polyvinylcarbazole fills the diffractive shape of the diffraction optical element and has a flattened surface, and combining the diffraction optical element with another diffraction optical element so that their diffraction surfaces are opposed to each other.

The present invention provides an optical material for molding an optical element by means of thermal polymerization, wherein the optical material comprises fluid N-vinylcarbazole and a thermal initiator.

The present invention provides an optical material for molding an optical element by means of photopolymerization, wherein the optical material comprises fluid N-vinylcarbazole and a photoinitiator.

The present invention provides the above optical material, wherein the photoinitiator comprises a radical polymerization initiator capable of generating radical species by irradiation of ultraviolet light or visible light.

The present invention provides the above optical material, wherein the photoinitiator comprises 1-hydroxycyclohexyl-phenyl-ketone.

The present invention provides the above optical material further comprising a compound having two or more unsaturated ethylene groups.

The present invention provides the above optical material, wherein the compound having two or more unsaturated ethylene groups is divinylbenzene.

The present invention provides the above optical material, wherein the compound having two or more unsaturated ethylene radicals is contained at a weight ratio ranging from 0.5 wt% to 2.5 wt%.

The present invention provides an optical element made of the above optical material.

The present invention provides an optical system comprising the above optical element.

The present invention provides the above optical system wherein the optical system is a photography optical system.

The present invention provides the above optical system wherein the optical system is a projection optical system.

The present invention provides an image-forming apparatus that uses the above optical system to form an image on a photosensitive body.

The above and other objects of the invention will become more apparent from the following drawings taken in conjunction with the accompanying drawings.

### BRIEF DESCRIPTION OF THE DRAWINGS

FIGS. 1A, 1B and 1C schematically show a formation process of a diffraction optical element comprising polyvinylcarbazole (PVCZ) according to a first embodiment;
FIGS. 2A, 2B and 2C schematically show a formation process of a diffraction optical element comprising a photo-curable resin according to the first embodiment;
FIG. 3 is a sectional view showing a laminated diffraction optical element using PVCZ according to the first embodiment;
FIG. 4A is a graph showing a first-order diffraction light intensity at an incidence angle of 0 degree for the laminated diffraction optical element according to the first embodiment;
FIG. 4B is a graph showing a decreasing rate (optical loss factor) of the first-order diffraction light intensity at changed incidence angles according to the first embodiment;
FIGS. 5A, 5B and 5C schematically show a formation process of a diffraction optical element comprising a photo-curable resin according to comparison example 1;
FIG. 6 is a sectional view showing a laminated diffraction optical element using a photo-curable resin in comparison example 1;
FIG. 7A is a graph showing a first-order diffraction light intensity at an incidence angle of 0 degree for the laminated diffraction optical element according to comparison example 1;
FIG. 7B is a graph showing a decreasing rate (optical loss factor) of the first-order diffraction light intensity at changed incidence angles according to the first embodiment and comparison example 1;
FIGS. 8A, 8B and 8C schematically show a formation process of a diffraction optical element comprising a PVCZ/chloroform solution according to a second embodiment;
FIG. 9A is a graph showing a first-order diffraction light intensity at an incidence angle of 0 degree for the laminated diffraction optical element according to the second embodiment;
FIG. 9B is a graph showing a decreasing rate (optical loss factor) of the first-order diffraction light intensity at changed incidence angles according to the second embodiment;
FIGS. 10A, 10B and 10C schematically show a formation process of a diffraction optical element by thermal-polymerization of N-PVCZ;
FIG. 11A is a graph showing a first-order diffraction light intensity at an incidence angle of 0 degree for the laminated diffraction optical element according to a third embodiment;
FIG. 11B is a graph showing a decreasing rate (optical loss factor) of the first-order diffraction light intensity at changed incidence angles according to the third embodiment;
FIGS. 12A, 12B and 12C schematically show a formation process of a diffraction optical element by photopolymerization of N-PVCZ;
FIG. 13A is a graph showing a first-order diffraction light intensity at an incidence angle of 0 degree for the laminated diffraction optical element according to a fourth embodiment;
FIG. 13B is a graph showing a decreasing rate (optical loss factor) of the first-order diffraction light intensity at changed incidence angles according to the fourth embodiment;
FIGS. 14A, 14B and 14C schematically show a formation process of a diffraction optical element comprising a thermal polymerization raw material according to a fifth embodiment;
FIG. 15A is a graph showing a first-order diffraction light intensity at an incidence angle of 0 degree for the laminated diffraction optical element according to a fifth embodiment;
FIG. 15B is a graph showing a decreasing rate (optical loss factor) of the first-order diffraction light intensity at changed incidence angles according to the fifth embodiment;
FIGS. 16A, 16B and 16C schematically show a formation process of a diffraction optical element comprising a photopolymerization raw material according to a sixth embodiment;
FIG. 17A is a graph showing a first-order diffraction light intensity at an incidence angle of 0 degree for the laminated diffraction optical element according to a sixth embodiment;
FIG. 17B is a graph showing a decreasing rate (optical loss factor) of the first-order diffraction light intensity at changed incidence angles according to the sixth embodiment;
FIGS. 18A, 18B and 18C schematically show a formation process of a diffraction optical element comprising a photopolymerization raw material according to a seventh embodiment;
FIG. 19A is a graph showing a first-order diffraction light intensity at an incidence angle of 0 degree for the laminated diffraction optical element according to a seventh embodiment;
FIG. 19B is a graph showing a decreasing rate (optical loss factor) of the first-order diffraction light intensity at changed incidence angles according to the seventh embodiment;
FIGS. 20A, 20B and 20C schematically show an experiment procedure concerning a diffraction optical element comprising a photopolymerization raw material according to an eighth embodiment;
FIG. 21 is a graph showing a transmittance at 400 nm for a diffraction optical element according to a ninth embodiment;
FIGS. 22A, 22B and 22C schematically show a formation process of a diffraction optical element comprising a photopolymerization raw material according to a tenth embodiment;
FIG. 23 is a sectional view showing a laminated diffraction optical element using PVCZ according to a tenth embodiment;
FIG. 24A is a graph showing a first-order diffraction light intensity at an incidence angle of 0 degree for the laminated diffraction optical element according to the tenth embodiment;
FIG. 24B is a graph showing a decreasing rate (optical loss factor) of the first-order diffraction light intensity at changed incidence angles according to the tenth embodiment;
FIGS. 25A, 25B and 25C schematically show a formation process of a diffraction optical element according to an eleventh embodiment;
FIG. 26 is a sectional view showing a laminated diffraction optical element using PVCZ according to a twelfth embodiment;
FIG. 27 is a sectional view showing a laminated diffraction optical element using PVCZ according to a thirteenth embodiment;
FIGS. 28A, 28B and 28C schematically show a formation process of a laminated diffraction optical element according to the thirteenth embodiment; and
FIG. 29 shows refractive index and Abbe number distribution of optical glasses and polymers as conventional optical materials.

### DESCRIPTION OF THE PREFERRED EMBODIMENTS

Embodiments of the present invention will be described in further detail. The present invention relates to a laminated diffraction optical element and a method of manufacturing the same. The molding material used for the optical element is polyvinylcarbazole that is an organic polymer material having a large refractive index dispersion (νd = 17.3) as mentioned above. The manufacturing method according to the present invention makes it possible to mold polyvinylcarbazole into any shape and provide an optical element having a transmittance of 80% or higher in a 100 µm area. Since the refractive index dispersion is large, the laminated structure has a thin diffraction grating shape.

The laminated optical element is configured to use two optical elements comprising two types of optical materials that have the diffraction grating structure and indicate different refractive index dispersions. These optical elements are arranged on a substrate and are laminated so that their diffraction gratings are opposed to each other. Of the two types of optical materials, polyvinylcarbazole is used as an optical material with high refractive index dispersion. It is also possible to laminate three optical elements and use polyvinylcarbazole as at least one of the optical materials.

In order to manufacture the optical element having such a diffraction grating structure using polyvinylcarbazole, it is possible to use a metal mold having a shape corresponding to the diffraction grating structure. As a manufacturing method, there can be used the thermoplastic molding that fills polyvinylcarbazole powder into a mold and heats and pressurizes it. The use of polyvinylcarbazole powder makes it possible to easily fill polyvinylcarbazole into complexly and finely shaped metal molds.

There is also available a method that dissolves cured polyvinylcarbazole into a solvent, fills it into a metal mold, and then cures it by heating. Since dissolved polyvinylcarbazole is filled into a metal mold, it is possible to easily fill polyvinylcarbazole into complexly and finely shaped metal molds. In this case, an intended shape is obtained by gradually evaporating to remove the used solvent in the metal mold.

Further, it is possible to cause a polymerization reaction in the metal mold for manufacturing. The raw material to be used is N-vinylcarbazole as mainly comprised monomer. Since N-vinylcarbazole is fluid, the raw material can be easily filled into gaps of the mold having a complex diffraction grating structure. When N-vinylcarbazole is polymerized, it changes to polyvinylcarbazole. When N-vinylcarbazole is filled into a mold and then is polymerized, it is possible to highly precisely mold the diffraction grating structure of polyvinylcarbazole.

The thermal polymerization can be used for the polymerization reaction of N-vinylcarbazole in a mold. Specifically, there are arranged a glass plate used as the substrate and a metal mold as opposed to each other. The metal mold corresponds to a fine diffraction grating structure. Then, fluid N-vinylcarbazole is poured into between the substrate and the mold. With this state maintained, heat is applied. Consequently, N-vinylcarbazole as mainly comprised monomer is heat-polymerized to become polyvinylcarbazole.

If there is a large difference between coefficients of thermal expansion for the substrate and the mold, a discrepancy occurs between diffraction grating intervals and the like when heated to a high temperature. In order to prevent such discrepancy, it is preferable to select the heating temperature at 150°C or lower for the thermal polymerization. In order to prevent volatilization of the monomer, it is preferable to select the heating temperature at 130°C or lower. If the heating temperature is too low, the polymerization reaction requires a long time to complete. It is preferable to set the heating temperature to at least 70°C or higher. Accordingly, it is preferable that the heating temperature for thermal polymerization be set to a range of not lower than 70°C and not higher than 130°C.

In order to keep the heating temperature low without slowing down a reaction speed, it is possible to use a method of applying a thermal polymerization initiator to induce a polymerization reaction. Available thermal polymerization initiators include, for example, azo-bis-iso-butyro-nitrile (AIBN), benzoyl peroxide, t-butyl peroxy-pivalate, t-butyl peroxy-neo-hexanoate, t-hexyl peroxy-neo-hexanoate, t-butyl peroxy-neo-decanoate, t-hexyl peroxy-neo-decanoate, cumyl peroxy-neo-hexanoate, cumyl peroxy-neo-decanoate, and the like.

It is possible to appropriately select an addition ratio of the thermal polymerization initiator according to the heating temperature. The ratio can be also adjusted in accordance with the average molecular weight as a target for the polymer to be obtained. According to the embodiment of the present invention, it is desirable to select the range of 0.005 to 10% by mass to be the addition ratio of the thermal polymerization initiator to N-vinylcarbazole as mainly comprised monomer of the raw material.

It is also possible to use photopolymerization instead of the above-mentioned thermal polymerization for the polymerization reaction in the mold of N-vinylcarbazole. When inducing the photopolymerization reaction by light irradiation, it is possible to use not only a mechanism caused by the radical generation accompanying the light absorption of N-vinylcarbazole itself, but also a mechanism to initiate the polymerization by using the photopolymerization initiator. It is preferable to use a mechanism caused by the radical generation due to light irradiation using a radical initiator as a photopolymerization initiator.

Available photopolymerization initiators for the N-vinylcarbazole include, for example, 1-hydroxycyclohexyl-phenyl-ketone, bis-(2,4,6-trimethylbenzoyl)-phenylphosphine oxide, 4-phenylbenzophenone. 4-phenoxybenzophenone, 4,4'-diphenylbenzophenone, 4,4'-diphenoxybenzophenone, and the like. It is possible to appropriately select an addition ratio of the photopolymerization initiator to the N-vinylcarbazole as mainly comprised monomer according to the dose of light radiation and an additional heating temperature. The ratio can be also adjusted in accordance with the average molecular weight as a target for the polymer to be obtained. When the addition ratio of the photopolymerization initiator to N-vinylcarbazole is to be applied to the manufacture of the diffraction optical element according to the present invention, it is desirable to select the range of 0.005 to 10% by mass to be the content of the photopolymerization initiator to the entire raw material. The use of the photopolymerization initiator makes it possible to freely configure irradiation conditions and greatly shorten the irradiation time.

When the light irradiation is used to mold a diffraction optical element comprising polyvinylcarbazole, the substrate comprises a transparent glass plate. The mold comprises a metal material corresponding to the fine diffraction grating structure. Fluid N-vinylcarbazole is filled into between the substrate and the mold. With this state maintained, light is irradiated to photopolymerize the N-vinylcarbazole as mainly comprised monomer. The light irradiation for such photopolymerization reaction uses light with a wavelength appropriate to the mechanism caused by the radical generation using the photopolymerization initiator. The light is evenly applied to the N-vinylcarbazole sandwiched between the substrate and the mold via the glass plate. The amount of light irradiated is appropriately selected according to the mechanism caused by the radical generation using the photopolymerization initiator and the content of the photopolymerization initiator contained.

As mentioned above, no solvent is needed for the photopolymerization and the thermal polymerization, making it possible to manufacture the optical element in a short operation time. Since N-vinylcarbazole itself is fluid, it can be easily poured into a finely shaped mold. Accordingly, a more preferred embodiment is to use the photopolymerization and the thermal polymerization. The embodiment using the photopolymerization and the thermal polymerization converts N-vinylcarbazole into polyvinylcarbazole while N-vinylcarbazole is held in the mold. This can prevent generation of unnecessary volatile components. Consequently, it is also possible to prevent generation of gas bubbles caused by a volatile compound, solvent, and the like remaining in the mold.

The following describes effective additives to polyvinylcarbazole when the polymerization reaction is used to manufacture the diffraction optical element comprising polyvinylcarbazole.

Since polyvinylcarbazole features a low shock resistance and due to being a linear polymer, it is subject to a large change in the elastic modulus depending on temperature. When an optical element comprises only polyvinylcarbazole formed by the polymerization reaction using N-vinylcarbazole and the polymerization initiator, the polymerization reaction causes curing and contraction in the mold to generate residual stress. This residual stress is released at high temperature and humidity or when the solvent is attached, causing deformation or generation of a crack. To prevent the deformation or crack, a compound having two or more unsaturated ethylene groups is added to N-vinylcarbazole and the photopolymerization initiator. It is preferable to use an optical material formed after they are bridged. This can prevent the residual stress during molding from being released at high temperature and humidity or when the solvent is attached, and suppress deformation or a crack.

The optical element to be used needs to be transparent. While polyvinylcarbazole is transparent, adding other compounds causes phase separation or makes polyvinylcarbazole cloudy. This may cause optical scattering. To solve this, the compound having two or more unsaturated ethylene radicals should be added 2.5 wt% or less. This can mold an optical element that is free from phase separation, cloudiness, or optical scattering. Adding the compound at 0.25 wt% or less can prevent the deformation or a crack from occurring.

It is preferable to use divinylbenzene as the compound to be added having two or more unsaturated ethylene radicals. Divinylbenzene enables the photopolymerization without oxygen inhibition like styrene and vinyltoluene. Divinylbenzene is a stable compound that does not react or evaporate under a heated condition of 80°C to 100°C.

N-vinylcarbazole is a crystalline compound and needs to be kept warm at 65°C (melting point) or higher because the crystal must be melted for the photopolymerization. Unlike highly reactive acrylic or methacrylic compounds, divinylbenzene does not react in several hours under heat retaining at 65°C or higher, allowing to form stable monomer. An optical material is requested to have a low Abbe number and a high refractive index. Divinylbenzene shows a high refractive index (Nd = 1.532 in liquid state). Divinylbenzene may allow a mixture of meta and para isomers.

The compound may include not only divinylbenzene, but also its impurities such as ethylvinylbenzene and diethylbenzene. When the optical element is molded through a method of mass polymerization using the photopolymerization, a small quantity of monomer remains in the mold. While there is no problem of a decrease in the heat resistance due to a mixture of ethylvinylbenzene or diethylbenzene, the optical scattering may increase highly possibly. In addition, bridging points decrease during polymerization. Therefore, it is desirable to minimize a mixture of ethylvinylbenzene or diethylbenzene.

Embodiments of the present invention will be described in further detail with reference to the accompanying drawings.

### First embodiment

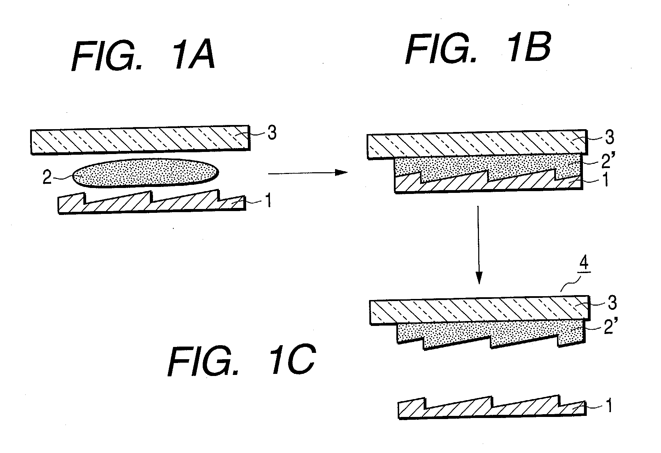

The first embodiment of the present invention will now be described with reference to FIGS. 1A through 1C, 2A through 2C, and 3. As shown in FIG. 1A, a metal mold 1 processed to a diffraction grating shape is first heated at 280°C in a nitrogen atmosphere and then is supplied with commercially available polyvinylcarbazole powder 2 (manufactured by ACROS). A glass (BK7) plate 3 is placed thereon. As shown in FIG. 1B, molding is performed at 280°C under a pressure of 20 MPa for two hours. After gradual cooling down to room temperature for approximately four hours, cured polyvinylcarbazole 2' is separated from the metal mold to manufacture a diffraction optical element 4 as shown in FIG. 1C.

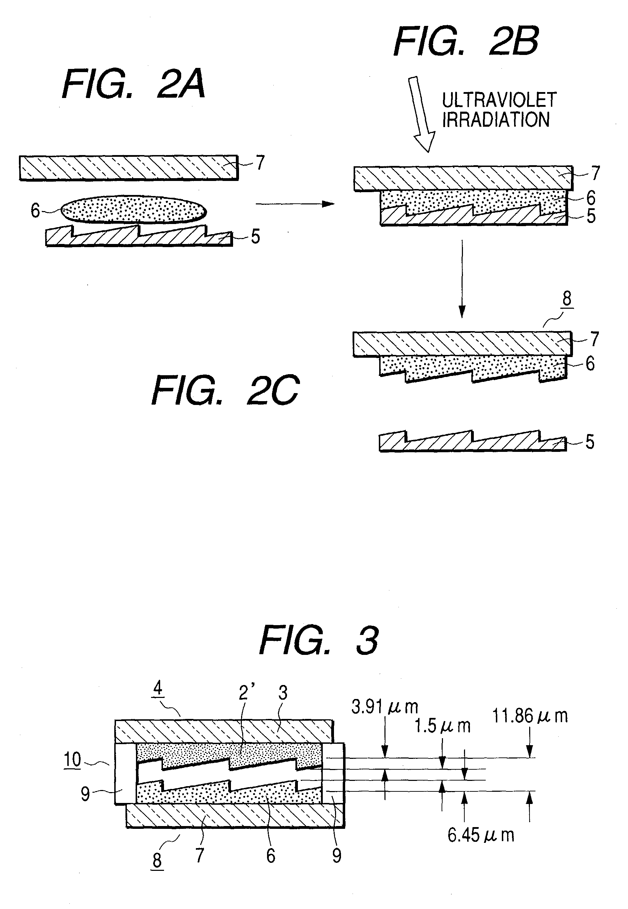

As shown in FIG. 2A, a metal mold 5 processed to a diffraction grating shape is heated at 280°C in a nitrogen atmosphere. A photo-curing resin 6 having optical characteristics (nd = 1.513, νd = 51.0) is poured into a metal mold 5. A glass (BK7) plate 7 is placed thereon and is pressurized as shown in FIG. 2B. Thereafter, a UV photolithography machine (EX250, manufactured by HOYA-SCHOTT), though not shown, is used for irradiation at 3,000 mJ/cm². As shown in FIG. 2C, a cured photo-curing resin 6 is separated from the metal mold 5 to manufacture a diffraction optical element 8.

An antireflection film is formed on a diffraction surface of the diffraction optical elements 4 and 8. As shown in FIG. 3, the diffraction optical elements 4 and 8 are combined so that the corresponding diffraction gratings become opposed to each other to manufacture a laminated diffraction optical element 10. The reference numeral 9 denotes a spacer to determine an interval between the diffraction optical elements 4 and 8. Each of the diffraction optical elements 4 and 8 uses a pitch of 80 µm between gratings. There is a distance of 11.8 µm between roots of the diffraction optical elements 4 and 8. There is a distance of 1.5 µm between crests thereof. The diffraction optical element 4 has a crest height of 3.91 µm. The diffraction optical element 8 has a crest height of 6.45 µm.

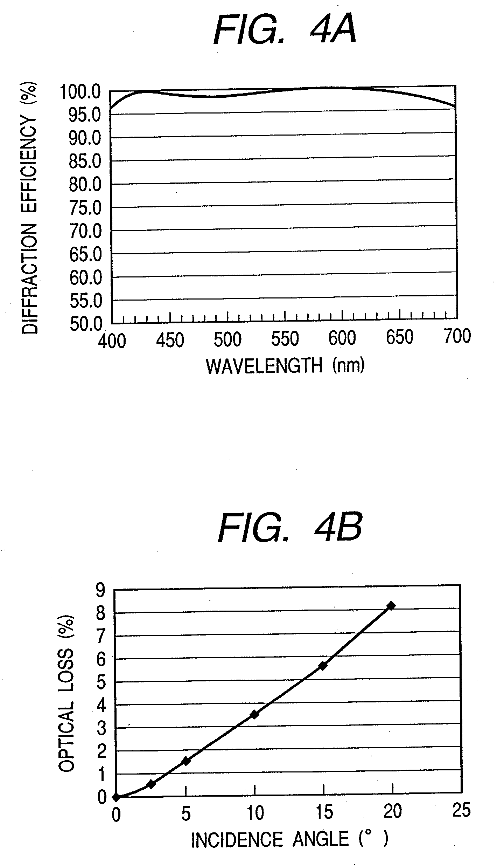

FIG. 4A is a graph showing a first-order diffraction light intensity at an incidence angle of 0 degree corresponding to each wavelength for the manufactured laminated diffraction optical element 10. The abscissa axis shows a wavelength. The ordinate axis shows a diffraction efficiency. FIG. 4A shows the diffraction efficiency of 95% or more against the first-order diffraction light between wavelengths 400 and 700 nm. It is possible to assume that the laminated diffraction optical element 10 indicates the distribution of wavelengths with good intensities in an available wavelength area.

FIG. 4B is a graph showing a decreasing rate of the first-order diffraction light intensity at each incidence angle changed. The abscissa axis shows an incidence angle. The ordinate axis shows an optical loss factor. As the incidence angle increases, the loss factor increases. FIG. 4B shows an optical loss factor of 3.52% at an incidence angle of 10 degrees. It is possible to assume that this value indicates a very good characteristic. Accordingly, it is possible to assume that the laminated diffraction optical element 10 causes a light beam to concentrate on a specific order.

### (Comparison Example 1)

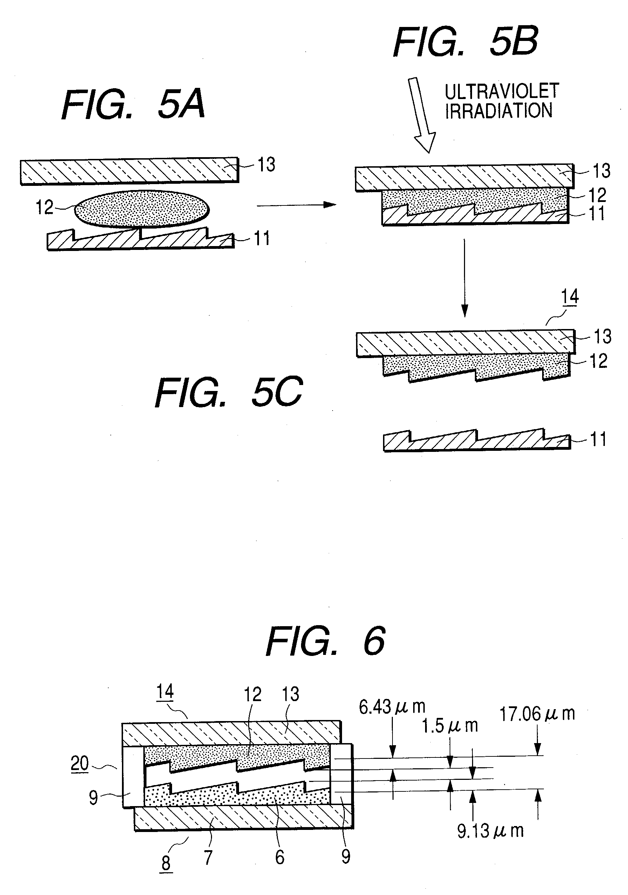

Comparison example 1 will now be described with reference to FIGS. 2A through 2C, 5A through 5C, and 6. A photo-curing resin 12 with optical characteristics (nd = 1.636, νd = 22.8) is used instead of the polyvinylcarbazole powder 2 as shown for the first embodiment. As shown in FIG. 5A, the photo-curing resin 12 is supplied to a metal mold 11. A glass (BK7) plate 13 is placed thereon and is pressurized as shown in FIG. 5B. Thereafter, the UV photolithography machine (EX250, manufactured by HOYA-SCHOTT), though not shown, is used for irradiation at 2,000 mJ/cm². As shown in FIG. 5C, the photo-curing resin 12 is separated from the metal mold 11 to manufacture a diffraction optical element 14. On the other hand, a diffraction element 18 is manufactured in the same manner as shown in FIGS. 2A through 2C according to the first embodiment.

An antireflection film is formed on the diffraction optical elements 14 and 8. As shown in FIG. 6, the diffraction optical elements 14 and 8 are combined so that the corresponding diffraction gratings become opposed to each other to manufacture a laminated diffraction optical element 20. Each of the diffraction optical elements 14 and 8 uses a pitch of 80 µm between gratings. There is a distance of 17.06 µm between roots of the diffraction optical elements 14 and 8. There is a distance of 1.5 µm between crests thereof. The diffraction optical element 14 has a crest height of 6.43 µm. The diffraction optical element 8 has a crest height of 9.13 µm.

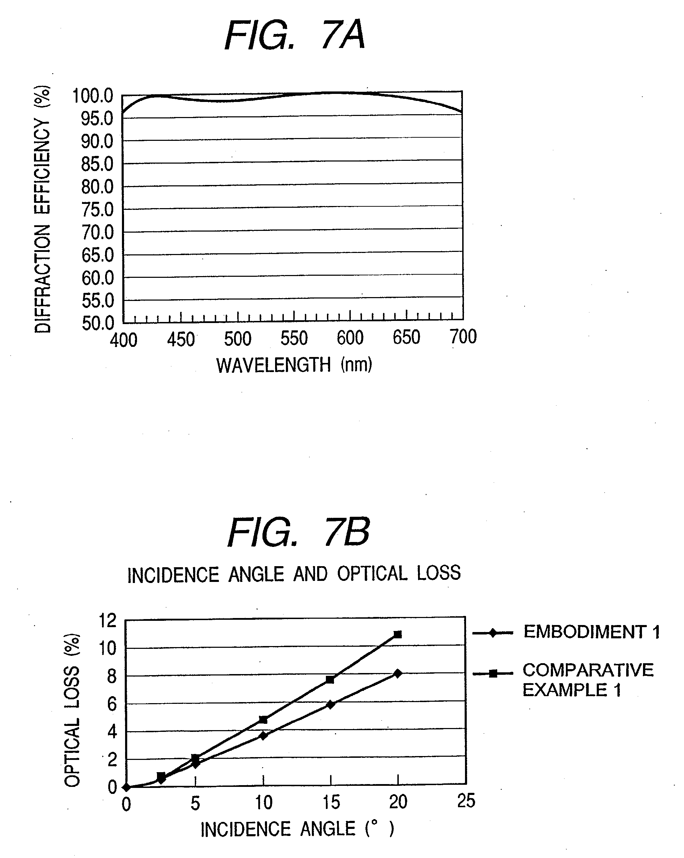

FIG. 7A is a graph showing a first-order diffraction light intensity at an incidence angle of 0 degree corresponding to each wavelength for the manufactured laminated diffraction optical element 20. The abscissa axis shows a wavelength. The ordinate axis shows a diffraction efficiency. FIG. 7A shows the diffraction efficiency of 95% or more against the first-order diffraction light between wavelengths 400 and 700 nm as an available wavelength area. Accordingly, it is possible to assume that the laminated diffraction optical element 20 indicates the distribution of wavelengths with good intensities in the available wavelength area.

FIG. 7B is a graph showing a decreasing rate of the first-order diffraction light intensity at changed incidence angles. The abscissa axis shows an incidence angle. The ordinate axis shows an optical loss factor. For comparison, the values for the first embodiment are also shown. As seen from FIG. 7B, optical loss factors of the comparison example 1 exceed those of the first embodiment. At an incidence angle of 10 degrees, the comparison example 1 indicates an optical loss factor of 4.58%. This is a 1.06% increase in the loss factor compared to the first embodiment. That is to say, the light beam does not concentrate on a specific order unlike the first embodiment. Consequently, a flare occurs to increase the chromatic aberration.

### Second Embodiment

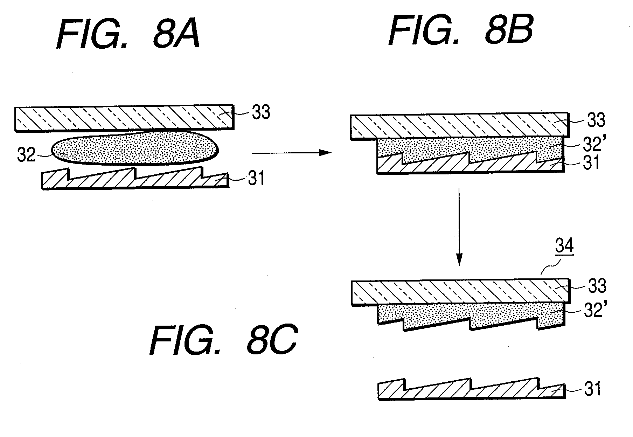

The second embodiment of the present invention will now be described with reference to FIGS. 8A through 8C. The present embodiment uses a solution 32 of 30 wt% polyvinylcarbazole (manufactured by ACROS) / chloroform instead of the polyvinylcarbazole powder 2 used for the first embodiment. The mutually corresponding members in the second and first embodiments are designated by the same reference numerals and a detailed description is omitted for simplicity.

As shown in FIG. 8A, a metal mold 31 processed to a diffraction grating shape is supplied with the solution 32 of 30 wt% polyvinylcarbazole (manufactured by ACROS) / chloroform. As shown in FIG. 8B, a glass (BK7) plate 33 is placed thereon and is heated at 70°C for 24 hours to remove the solvent. After vacuum drying at room temperature for 48 hours, cured polyvinylcarbazole 32' is separated from the metal mold 31 to manufacture a diffraction optical element 34. On the other hand, the diffraction optical element 8 is manufactured in the same manner as for the first embodiment.

An antireflection film is formed on a diffraction surface of the diffraction optical elements 34 and 8. The diffraction optical elements 34 and 8 are combined so that the corresponding diffraction gratings become opposed to each other to manufacture a laminated diffraction optical element. Each of the diffraction optical elements 34 and 8 uses a pitch of 80 µm between gratings. The diffraction portion has a layer thickness of 11.8 µm.

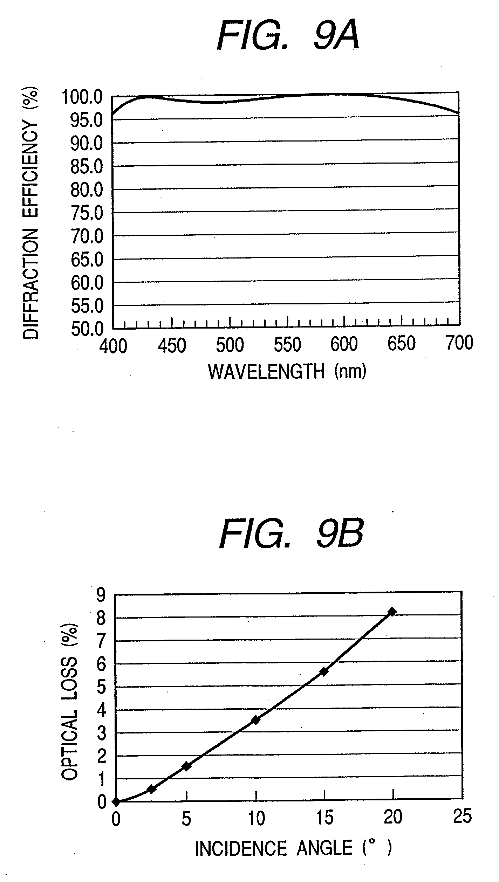

FIG. 9A is a graph showing a first-order diffraction light intensity at an incidence angle of 0 degree corresponding to each wavelength for the manufactured laminated diffraction optical element. The abscissa axis shows a wavelength. The ordinate axis shows a diffraction efficiency. FIG. 9A shows the diffraction efficiency of 95% or more against the first-order diffraction light between wavelengths 400 and 700 nm. Accordingly, it is possible to assume that the laminated diffraction optical element according to the embodiment indicates the distribution of wavelengths with good intensities in the available wavelength area.

FIG. 9B is a graph showing a decreasing rate of the first-order diffraction light intensity at changed incidence angles. The abscissa axis shows an incidence angle. The ordinate axis shows an optical loss factor. As the incidence angle increases, the loss factor increases. FIG. 9B shows an optical loss factor of 3.52% at an incidence angle of 10 degrees. It is possible to assume that this value indicates a very good characteristic. Accordingly, it is possible to assume that the laminated diffraction optical element 10 according to the embodiment causes a light beam to concentrate on a specific order.

### Third embodiment

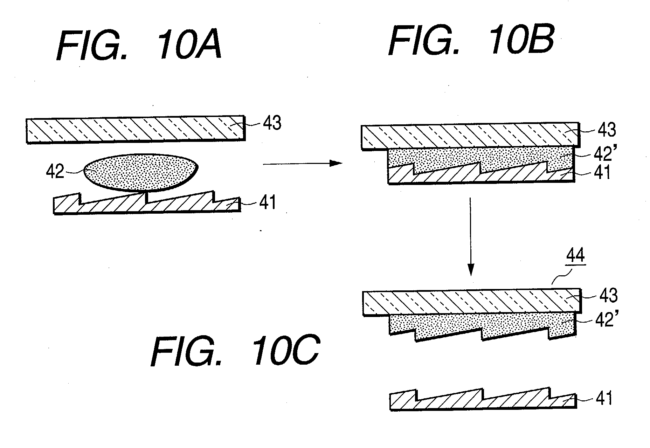

The third embodiment of the present invention will now be described with reference to FIGS. 10A through 10C. The present embodiment uses N-vinylcarbazole 42 (manufactured by TOKYO KASEI KOGYO) as a fluid raw material for thermal polymerization instead of the polyvinylcarbazole powder 2 used for the first embodiment. The mutually corresponding members in the third and first embodiments are designated by the same reference numerals and a detailed description is omitted for simplicity.

As shown in FIG. 10A, a metal mold 41 processed to a diffraction grating shape is supplied with the N-vinylcarbazole 42. As shown in FIG. 10B, a glass (BK7) plate 43 is placed thereon and is heated at 120°C for five hours to perform the thermal polymerization molding. Due to this heating, the N-vinylcarbazole 42 is polymerized and is converted into cured polyvinylcarbazole 42'. Thereafter, as shown in FIG. 10C, the polyvinylcarbazole is separated from the metal mold 41 to manufacture a diffraction optical element 44. On the other hand, the diffraction optical element 8 is manufactured in the same manner as for the first embodiment.

An antireflection film is formed on a diffraction surface of the diffraction optical elements 44 and 8. The diffraction optical elements 44 and 8 are combined so that the corresponding diffraction gratings become opposed to each other to manufacture a laminated diffraction optical element. Each of the diffraction optical elements 44 and 8 uses a pitch of 80 µm between gratings. The diffraction portion has a layer thickness of 11.8 µm.

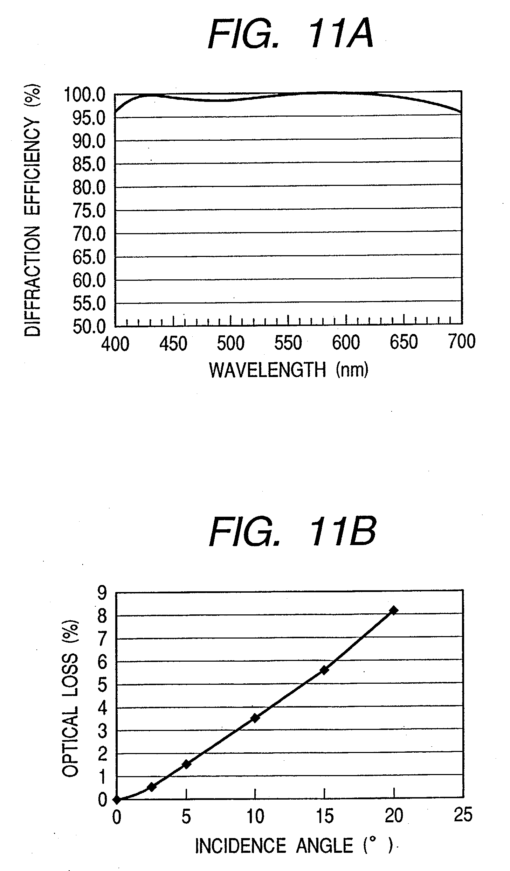

FIG. 11A is a graph showing a first-order diffraction light intensity at an incidence angle of 0 degree corresponding to each wavelength for the manufactured laminated diffraction optical element. The abscissa axis shows a wavelength. The ordinate axis shows a diffraction efficiency. FIG. 11A shows the diffraction efficiency of 95% or more against the first-order diffraction light between wavelengths 400 and 700 nm. Accordingly, it is possible to assume that the laminated diffraction optical element according to the embodiment indicates the distribution of wavelengths with good intensities in the available wavelength area.

FIG. 11B is a graph showing a decreasing rate of the first-order diffraction light intensity at changed incidence angles. The abscissa axis shows an incidence angle. The ordinate axis shows an optical loss factor. As the incidence angle increases, the loss factor increases. FIG. 11B shows an optical loss factor of 3.52% at an incidence angle of 10 degrees. It is possible to assume that this value indicates a very good characteristic. Accordingly, it is possible to assume that the laminated diffraction optical element 10 according to the embodiment causes a light beam to concentrate on a specific order.

### Fourth embodiment

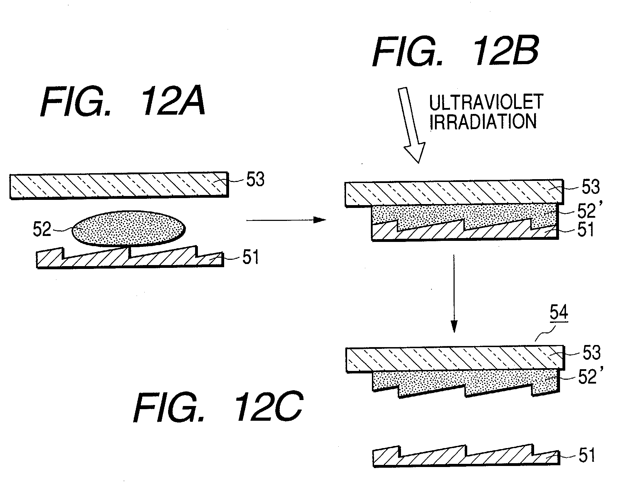

The fourth embodiment of the present invention will now be described with reference to FIGS. 12A through 12C. The present embodiment uses N-vinylcarbazole 52 (manufactured by TOKYO KASEI KOGYO) as a fluid raw material for thermal polymerization instead of the polyvinylcarbazole powder 2 used for the first embodiment. The mutually corresponding members in the fourth and first embodiments are designated by the same reference numerals and a detailed description is omitted for simplicity.

As shown in FIG. 12A, a metal mold 51 processed to a diffraction grating shape is supplied with the N-vinylcarbazole 52. As shown in FIG. 10B, a glass (BK7) plate 43 is placed thereon and is heated at 70°C. Via the glass plate 53, the UV photolithography machine (EX250, manufactured by HOYA-SCHOTT) is used to irradiate ultraviolet light 500 J/cm² (100 mW/cm² for 5000 seconds) to perform the photopolymerization molding. Due to this irradiation, the N-vinylcarbazole 22 is polymerized and is converted into cured polyvinylcarbazole 42'. Thereafter, as shown in FIG. 12C, the polyvinylcarbazole is separated from the metal mold 51 to manufacture a diffraction optical element 54. On the other hand, the diffraction optical element 8 is manufactured in the same manner as for the first embodiment.

An antireflection film is formed on a diffraction surface of the diffraction optical elements 54 and 8. The diffraction optical elements 54 and 8 are combined so that the corresponding diffraction gratings become opposed to each other to manufacture a laminated diffraction optical element. Each of the diffraction optical elements 54 and 8 uses a pitch of 80 µm between gratings. The diffraction portion has a layer thickness of 11.8 µm.

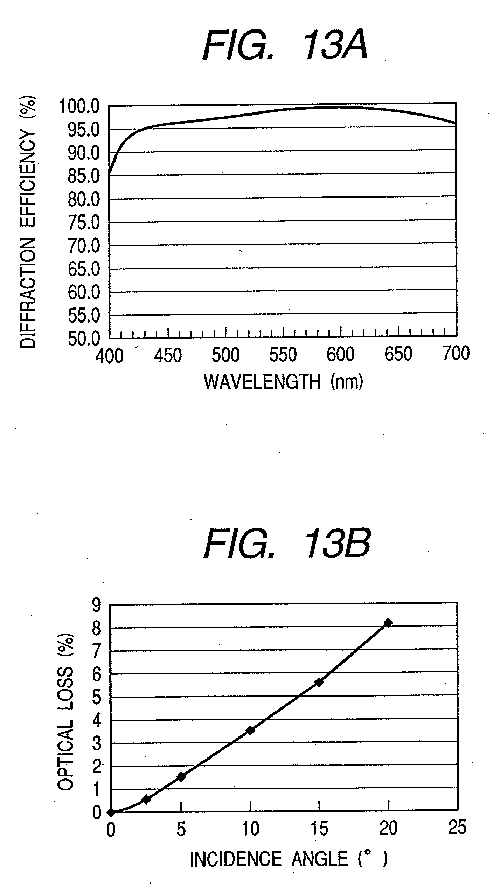

FIG. 13A is a graph showing a first-order diffraction light intensity at an incidence angle of 0 degree corresponding to each wavelength for the manufactured laminated diffraction optical element. The abscissa axis shows a wavelength. The ordinate axis shows a diffraction efficiency. FIG. 13A shows the diffraction efficiency of 95% or more against the first-order diffraction light between wavelengths 500 and 700 nm. Further, an area between wavelengths 400 and 700 nm also indicates the diffraction efficiency of 85% or more. Accordingly, it is possible to assume that the laminated diffraction optical element according to the embodiment indicates the distribution of wavelengths with good intensities in the available wavelength area.

FIG. 13B is a graph showing a decreasing rate of the first-order diffraction light intensity at changed incidence angles. The abscissa axis shows an incidence angle. The ordinate axis shows an optical loss factor. As the incidence angle increases, the loss factor increases. FIG. 13B shows an optical loss factor of 3.52% at an incidence angle of 10 degrees. It is possible to assume that this value indicates a very good characteristic. Accordingly, it is possible to assume that the laminated diffraction optical element 10 according to the embodiment causes a light beam to concentrate on a specific order.

### Fifth embodiment

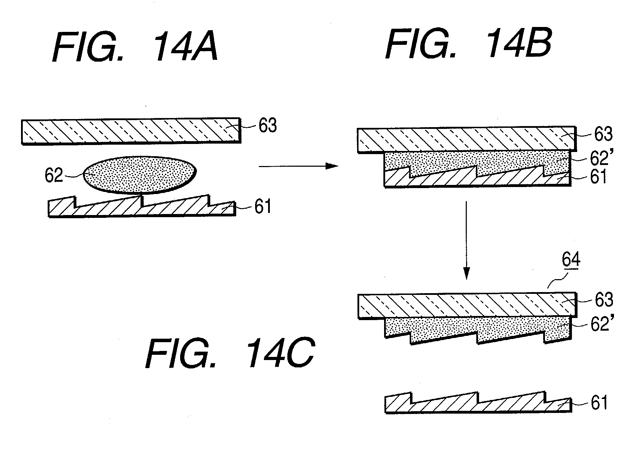

The fifth embodiment of the present invention will now be described with reference to FIGS. 14A through 14C. The present embodiment uses a raw material 62 for thermal polymerization prepared by adding 0.5% of a thermal polymerization initiator (AIBM) to the N-vinylcarbazole 42 as shown in the third embodiment. The mutually corresponding members in the fifth and first embodiments are designated by the same reference numerals and a detailed description is omitted for simplicity.

As shown in FIG. 14A, a metal mold 61 processed to a diffraction grating shape is supplied with the raw material 62 for thermal polymerization. As shown in FIG. 14B, a glass (BK7) plate 63 is placed thereon and is heated at 100°C for two hours to perform the thermal polymerization molding. Due to this heating, the raw material 62 for thermal polymerization is converted into cured polyvinylcarbazole 62'. Thereafter, as shown in FIG. 14C, the polyvinylcarbazole is separated from the metal mold 61 to manufacture a diffraction optical element 64. On the other hand, the diffraction optical element 8 is manufactured in the same manner as for the first embodiment.

An antireflection film is formed on a diffraction surface of the diffraction optical elements 64 and 8. The diffraction optical elements 64 and 8 are combined so that the corresponding diffraction gratings become opposed to each other to manufacture a laminated diffraction optical element. Each of the diffraction optical elements 64 and 8 uses a pitch of 80 µm between gratings. The diffraction portion has a layer thickness of 11.8 µm.

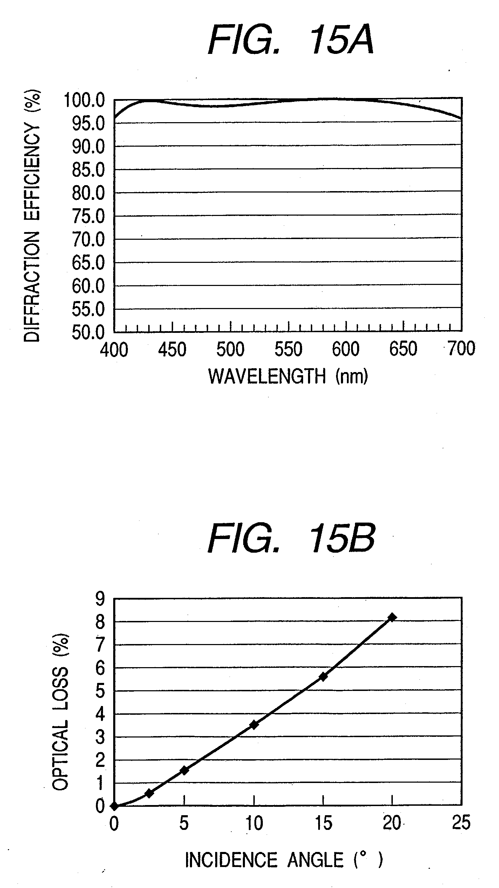

FIG. 15A is a graph showing a first-order diffraction light intensity at an incidence angle of 0 degree corresponding to each wavelength for the manufactured laminated diffraction optical element. The abscissa axis shows a wavelength. The ordinate axis shows a diffraction efficiency. FIG. 15A shows the diffraction efficiency of 95% or more against the first-order diffraction light between wavelengths 500 and 700 nm. Accordingly, it is possible to assume that the laminated diffraction optical element according to the embodiment indicates the distribution of wavelengths with good intensities in the available wavelength area.

FIG. 15B is a graph showing a decreasing rate of the first-order diffraction light intensity at changed incidence angles. The abscissa axis shows an incidence angle. The ordinate axis shows an optical loss factor. As the incidence angle increases, the loss factor increases. FIG. 15B shows an optical loss factor of 3.52% at an incidence angle of 10 degrees. It is possible to assume that this value indicates a very good characteristic. Accordingly, it is possible to assume that the laminated diffraction optical element 10 according to the embodiment causes a light beam to concentrate on a specific order.

As shown in this embodiment, it is possible to lower the heating temperature and shorten the heating time by using N-vinylcarbazole added with the thermal polymerization initiator as the raw material for thermal polymerization.

### Sixth embodiment

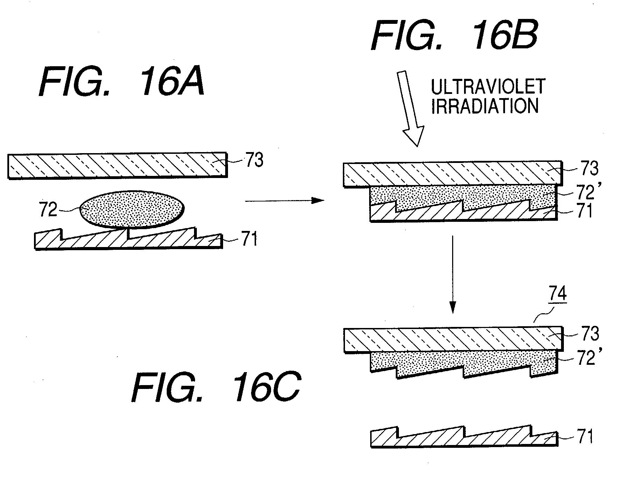

The sixth embodiment of the present invention will now be described with reference to FIGS. 16A through 16C. The present embodiment uses a raw material 72 for thermal polymerization prepared by adding 1% of a photopolymerization initiator, 2-benzil-2-dimethylamino-1-(4-morpholinophenyl)-1-butanone, to the N-vinylcarbazole 52 as shown in the fourth embodiment. The mutually corresponding members in the sixth and first embodiments are designated by the same reference numerals and a detailed description is omitted for simplicity.

As shown in FIG. 16A, a metal mold 71 processed to a diffraction grating shape is supplied with the raw material 72 for thermal polymerization. As shown in FIG. 16B, a glass (BK7) plate 73 is placed thereon and is heated at 70°C. Via the glass plate 73, the UV photolithography machine (EX250, manufactured by HOYA-SCHOTT) is used to irradiate ultraviolet light 20,000 mJ/cm² (100 mW/cm² for 200 seconds) to perform the photopolymerization molding. Due to this irradiation to the raw material 72 for thermal polymerization, its N-vinylcarbazole 52 is polymerized and is converted into cured polyvinylcarbazole 72'. Thereafter, as shown in FIG. 16C, the polyvinylcarbazole is separated from the metal mold 71 to manufacture a diffraction optical element 74. On the other hand, the diffraction optical element 8 is manufactured in the same manner as for the first embodiment.

An antireflection film is formed on a diffraction surface of the diffraction optical elements 74 and 8. The diffraction optical elements 74 and 8 are combined so that the corresponding diffraction gratings become opposed to each other to manufacture a laminated diffraction optical element. Each of the diffraction optical elements 74 and 8 uses a pitch of 80 µm between gratings. The diffraction portion has a layer thickness of 11.8 µm.

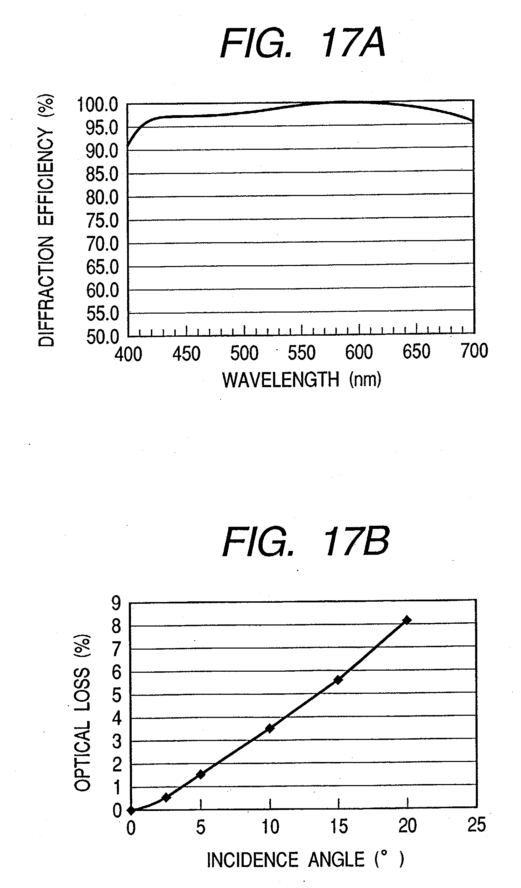

FIG. 17A is a graph showing a first-order diffraction light intensity at an incidence angle of 0 degree corresponding to each wavelength for the manufactured laminated diffraction optical element. The abscissa axis shows a wavelength. The ordinate axis shows a diffraction efficiency. FIG. 17A shows the diffraction efficiency of 95% or more against the first-order diffraction light between wavelengths 450 and 700 nm. Further, an area between wavelengths 400 and 450 nm also indicates the diffraction efficiency of 90% or more. Accordingly, it is possible to assume that the laminated diffraction optical element according to the embodiment indicates the distribution of wavelengths with good intensities in the available wavelength area.

FIG. 17B is a graph showing a decreasing rate of the first-order diffraction light intensity at changed incidence angles. The abscissa axis shows an incidence angle. The ordinate axis shows an optical loss factor. As the incidence angle increases, the loss factor increases. FIG. 17B shows an optical loss factor of 3.52% at an incidence angle of 10 degrees. It is possible to assume that this value indicates a very good characteristic. Accordingly, it is possible to assume that the laminated diffraction optical element according to the embodiment causes a light beam to concentrate on a specific order.

As shown in the embodiment, it is possible to greatly shorten the irradiation time by using the raw material for photopolymerization comprising N-vinylcarbazole added with the photopolymerization initiator.

### Seventh embodiment

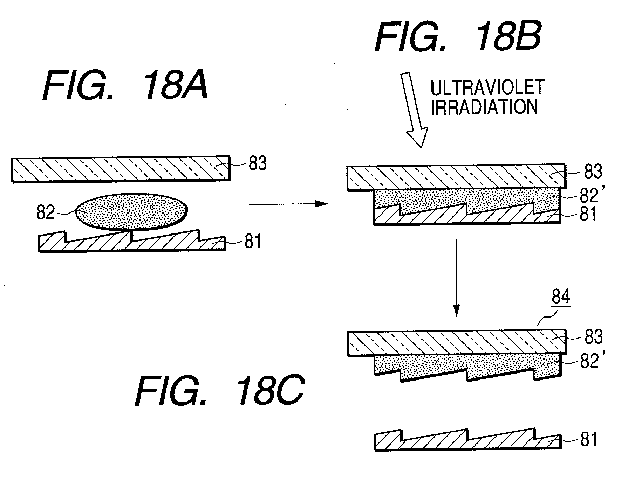

The seventh embodiment of the present invention will now be described with reference to FIGS. 18A through 18C. The present embodiment uses a raw material 82 for photopolymerization prepared by adding 1% of a photopolymerization initiator, 1-hydroxycyclohexyl-phenyl-ketone, to the N-vinylcarbazole 52 as shown in the fourth embodiment. The mutually corresponding members in the seventh and first embodiments are designated by the same reference numerals and a detailed description is omitted for simplicity.

As shown in FIG. 18A, a metal mold 81 processed to a diffraction grating shape is supplied with the raw material 82 for thermal polymerization. As shown in FIG. 18B, a glass (BK7) plate 83 is placed thereon and is heated at 70°C. Via the glass plate 83, the UV photolithography machine (EX250, manufactured by HOYA-SCHOTT) is used to irradiate ultraviolet light 20,000 mJ/cm² (100 mW/cm² for 200 seconds) to perform the photopolymerization molding. Due to this irradiation to the raw material 82 for thermal polymerization, its N-vinylcarbazole 52 is polymerized and is converted into cured polyvinylcarbazole 82'. Thereafter, as shown in FIG. 18C, the polyvinylcarbazole is separated from the mold 81 to manufacture a diffraction optical element 74. On the other hand, the diffraction optical element 8 is manufactured in the same manner as for the first embodiment.

An antireflection film is formed on a diffraction surface of the diffraction optical elements 74 and 8. The diffraction optical elements 74 and 8 are combined so that the corresponding diffraction gratings become opposed to each other to manufacture a laminated diffraction optical element. Each of the diffraction optical elements 74 and 8 uses a pitch of 80 µm between gratings. The diffraction portion has a layer thickness of 11.8 µm.

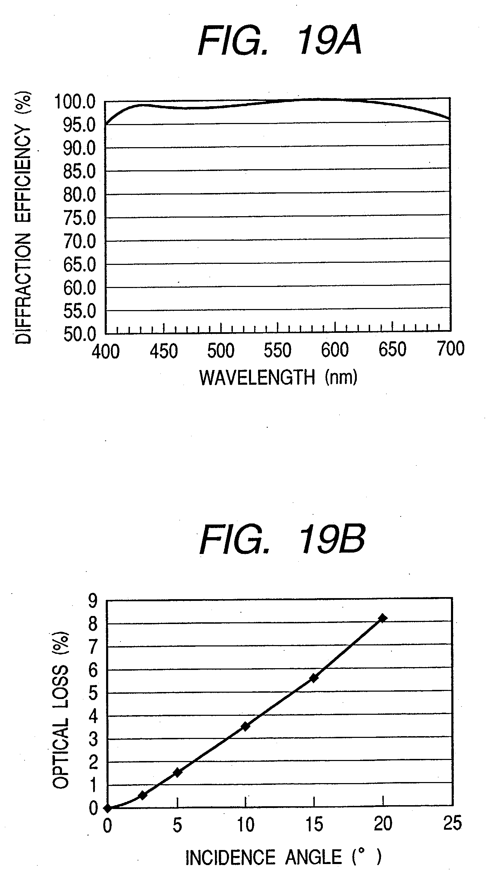

FIG. 19A is a graph showing a first-order diffraction light intensity at an incidence angle of 0 degree corresponding to each wavelength for the manufactured laminated diffraction optical element. The abscissa axis shows a wavelength. The ordinate axis shows a diffraction efficiency. FIG. 19A shows the diffraction efficiency of 95% or more against the first-order diffraction light between wavelengths 450 and 700 nm. Accordingly, it is possible to assume that the laminated diffraction optical element according to the embodiment indicates the distribution of wavelengths with good intensities in the available wavelength area.

FIG. 19B is a graph showing a decreasing rate of the first-order diffraction light intensity at changed incidence angles. The abscissa axis shows an incidence angle. The ordinate axis shows an optical loss factor. As the incidence angle increases, the loss factor increases. FIG. 19B shows an optical loss factor of 3.52% at an incidence angle of 10 degrees. It is possible to assume that this value indicates a very good characteristic. Accordingly, it is possible to assume that the laminated diffraction optical element according to the embodiment causes a light beam to concentrate on a specific order.

As shown in the embodiment, it is possible to greatly shorten the irradiation time by using the raw material for photopolymerization comprising N-vinylcarbazole added with the photopolymerization initiator.

### Eighth embodiment

The eighth embodiment of the present invention will now be described. The present embodiment uses a raw material 92 for photopolymerization prepared by adding compound having two or more unsaturated ethylene radicals as additives to the raw material 82 for photopolymerization as shown in the seventh embodiment.

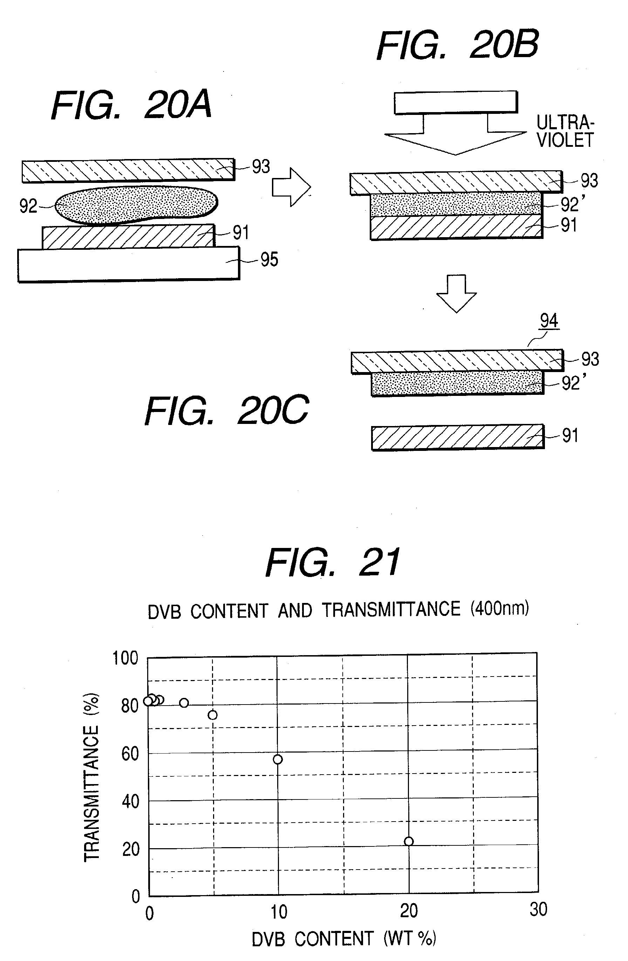

We carried out the following experiments in order to effectiveness of the additives. FIGS. 20A through 20C schematically show a procedure of the experiments. We used compounds having two or more unsaturated ethylene radicals for experiment examples 1 through 8 in Table 1.

**Table 1**

| | Compound | Product Name | Manufacturer |
|---|---|---|---|
| Experiment Example 1 | Tripropylene glycol diacrylate | M-220 | Toagosei Co., Ltd. |
| Experiment Example 2 | Trimethylolpropane triacrylate | M-309 | Toagosei Co., Ltd. |
| Experiment Example 3 | Trimethylol ethoxylated triacrylate | M-350 | Toagosei Co., Ltd. |
| Experiment Example 4 | Ethoxylated (n=4) bisphenol A diacrylate | BPE-4 | Dai-ichi Kogyo Seiyaku Co., Ltd. |
| Experiment Example 5 | Ethoxylated (n=10) bisphenol A diacrylate | BPE-10 | Dai-ichi Kogyo Seiyaku Co., Ltd. |
| Experiment Example 6 | Propoxylated (n=4) bisphenol A diacrylate | BPP-4 | Dai-ichi Kogyo Seiyaku Co., Ltd. |
| Experiment Example 7 Example 7 | Tris (acryloxyethyl) isocyanate | GX-8430 | Tris (acryloxyethyl) isocyanate |
| Experiment Example 8 | Divinylbenzene | - | Tokyo Kasei Kogyo Co., Ltd. |

First, we mixed 9.8 g of N-vinylcarbazole (manufactured by Tokyo Kasei Kogyo Co., Ltd.) with 0.1 g of 1-hydroxycyclohexyl-phenyl-ketone as a photopolymerization initiator and heat-melted it at 80°C for two hours. After fully stirring the mixture, we added 0.1 g each of the components having two or more unsaturated ethylene radicals as listed in Table 1. Then, we fully stirred the mixture at 80°C to prepare the raw material 92 for photopolymerization. Then, as shown in FIG. 20A, we supplied a flat metal mold 91 with approximately 0.004 g of the raw material 92 for photopolymerization using a dispenser. A heater 95 controls the temperature of the mold within ±1.0°C. After placing a 50 µm spacer on the mold metal 91 as shown in FIG. 20B, we pressed a glass (BK7) plate 93 kept at 80°C to the raw material 92 for photopolymerization. We spread the raw material 92 for photopolymerization to an intended shape, and then irradiated ultraviolet light with the center wavelength of 365 nm for 1,000 s at 40 mW to perform the photopolymerization molding. Due to this irradiation to the raw material 92 for thermal polymerization, its N-vinylcarbazole is polymerized and is converted into cured polyvinylcarbazole 92'. Finally, as shown in FIG. 20C, the polyvinylcarbazole 92' is separated from the metal mold 91 to manufacture a diffraction optical element 94.

We verified monomer-mixed states in the raw material 92 for photopolymerization added with the compounds shown in the first to eighth experiment examples. We conducted a heat retaining test at 80°C for five hours in order to confirm the stability in monomer-mixed states. We further confirmed cloudiness of the molded material when cured, the presence of a solvent crack by means of ethanol instillation, and deformation on the molded surface after an environment resistance test at a high temperature of 70°C and a high humidity of 70% for 200 hours. With respect to the experiment example 7, the raw material 92 cured when monomer was mixed. Therefore, we could not perform the succeeding molding or tests. For the other experiment examples, the viscosity increased soon after monomer was mixed. Since the raw material 92 was moldable, the molding was performed. Table 2 shows the results.

**Table 2**

| | Mixed | Kept Warm at 80°C | Cloudiness of Material | Solvent Crack | Surface Deformation |
|---|---|---|---|---|---|
| Experiment Example 1 | Δ (viscosity increased) | × (viscosity increased greatly) | ○ | ○ | ○ |
| Experiment Example 2 | Δ (viscosity increased) | × (viscosity increased greatly) | ○ | ○ | ○ |
| Experiment Example 3 | Δ (viscosity increased) | × (viscosity increased greatly) | ○ | ○ | ○ |
| Experiment Example 4 | Δ (viscosity increased) | × (viscosity increased greatly) | ○ | ○ | ○ |
| Experiment Example 5 | Δ (viscosity increased) | × (viscosity increased greatly) | ○ | ○ | ○ |
| Experiment Example 6 | Δ (viscosity increased) | × (viscosity increased greatly) | ○ | ○ | ○ |
| Experiment Example 7 | × (cured) | - | - | - | - |
| Experiment Example 8 | ○ | ○ | ○ | ○ | ○ |

As seen from Table 2, except the experiment example 7, addition of the compound having two or more unsaturated ethylene radicals enabled provision of the molded material that is optically transparent and is free from surface deformation due to a solvent crack or resistance to a high temperature.

### Ninth embodiment

The ninth embodiment of the present invention will now be described. The raw material for photopolymerization according to the embodiment is a mixture of N-vinylcarbazole, 1-hydroxycyclohexyl-phenyl-ketone as a photopolymerization initiator, and diethylbenzene as an additive in accordance with the experiment example 8 in the eighth embodiment.

We mixed the materials at ratios according to experiment examples 9 through 15 in Table 3, heat-melted them at 80°C for two hours, and fully stirred them to obtain the raw material for photopolymerization according to the embodiment. We then manufactured a molded material in the manner similar to that for the eighth embodiment. As a comparison experiment example, we also manufactured a raw material for photopolymerization without adding divinylbenzene.

**Table 3**

| | N-polyvinylcarbazole Weight (g) | Caccure 184 Weight (g) | Divinylbenzene Weight (g) |
|---|---|---|---|
| Comparison Experiment Example | 9.900 | 0.1 | 0.000 |
| Experiment Example 9 | 9.875 | 0.1 | 0.025 |
| Experiment Example 10 | 9.850 | 0.1 | 0.050 |
| Experiment Example 11 | 9.900 | 0.1 | 0.100 |
| Experiment Example 12 | 9.650 | 0.1 | 0.250 |
| Experiment Example 13 | 9.400 | 0.1 | 0.500 |
| Experiment Example 14 | 8.900 | 0.1 | 1.000 |
| Experiment Example 15 | 7.900 | 0.1 | 2.000 |

In order to evaluate cloudiness of the molded material, we measured transmittance and verified cloudiness and the like about each raw material for photopolymerization comprising the compound as shown in the experiment examples 9 through 15 and the comparison experiment example. We also confirmed a solvent crack test by means of ethanol instillation and deformation on the molded surface after an environment resistance test at a high temperature of 70°C and a high humidity of 70% for 200 hours. Table 4 shows results of surface deformation in the environment resistance test at high temperature and humidity and the solvent crack test. FIG. 21 shows the transmittance at 400 nm for the experiment examples 9 through 15 and the comparison experiment example. In FIG. 21, the abscissa indicates the concentration of divinylbenzene (DVB) and the ordinate indicates the transmittance.

**Table 4**

| | Surface Deformation | Solvent Crack |
|---|---|---|
| Comparison Experiment Example | × | × |
| Experiment Example 9 | × | × |
| Experiment Example 10 | ○ | ○ |
| Experiment Example 11 | ○ | ○ |
| Experiment Example 12 | ○ | ○ |
| Experiment Example 13 | ○ | ○ |
| Experiment Example 14 | ○ | ○ |
| Experiment Example 15 | ○ | ○ |

The experiment examples 9 through 12 use the amount range of 0.25% to 2.5% of divinylbenzene added. As seen from FIG. 21, these experiment examples indicate almost the same transmittance as that of the comparison experiment example with no divinylbenzene added. The experiment examples 13 through 15 use the amount range of 5.0% or more of divinylbenzene added. As seen from Table 4, these experiment examples caused the molded material to be cloudy and decreased the transmittance. Neither solvent crack nor surface deformation was observed in the experiment examples 10 through 15 that use the amount range of 0.5% or more of divinylbenzene added.

Accordingly, it is possible to assume that it is optimal to add divinylbenzene within the range between 0.5 wt% to 2.5 wt%.

### Tenth embodiment

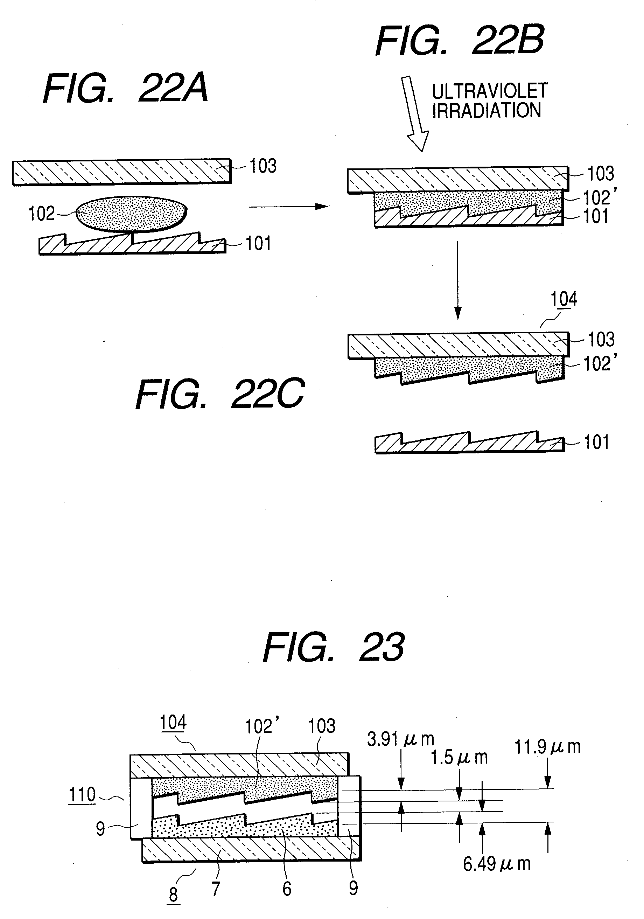

The tenth embodiment of the present invention will now be described with reference to FIGS. 22A through 22C. A raw material 102 for photopolymerization according to the embodiment is a mixture of 9.900 g of N-vinylcarbazole, 0.100 g of 1-hydroxycyclohexyl-phenyl-ketone as a photopolymerization initiator, and 0.100 g of diethylbenzene as an additive in accordance with the experiment example 11 in the ninth embodiment.

As shown in FIG. 22A, a metal mold 101 processed to a diffraction grating shape is supplied with the raw material 102 for photopolymerization equivalent to the experiment example 11. As shown in FIG. 22B, a glass (BK7) plate 101 is placed thereon and is heated at 70°C. Via the glass plate 101, the UV photolithography machine (EX250, manufactured by HOYA-SCHOTT) is used to irradiate ultraviolet light 20,000 mJ/cm² (100 mW/cm² for 200 seconds) to perform the photopolymerization molding. Due to this irradiation, N-vinylcarbazole is polymerized and is converted into cured polyvinylcarbazole 102'. Thereafter, as shown in FIG. 22C, the polyvinylcarbazole is separated from the metal mold to manufacture a diffraction optical element 104. At this time, we measured the Abbe number νd = 17.5 for the diffraction optical element 104. On the other hand, the diffraction optical element 8 is manufactured in the same manner as for the first embodiment.

As shown in FIG. 23, an antireflection film is formed on a diffraction surface of the diffraction optical elements 102 and 8. The diffraction optical elements 102 and 8 are combined so that the corresponding diffraction gratings become opposed to each other to manufacture a laminated diffraction optical element 110. Each of the diffraction optical elements 102 and 8 uses a pitch of 80 µm between gratings. There is a distance of 11.9 µm between roots of the diffraction optical elements 102 and 8. There is a distance of 1.5 µm between crests thereof. The diffraction optical element 102 has a crest height of 3.91 µm. The diffraction optical element 8 has a crest height of 6.49 µm.

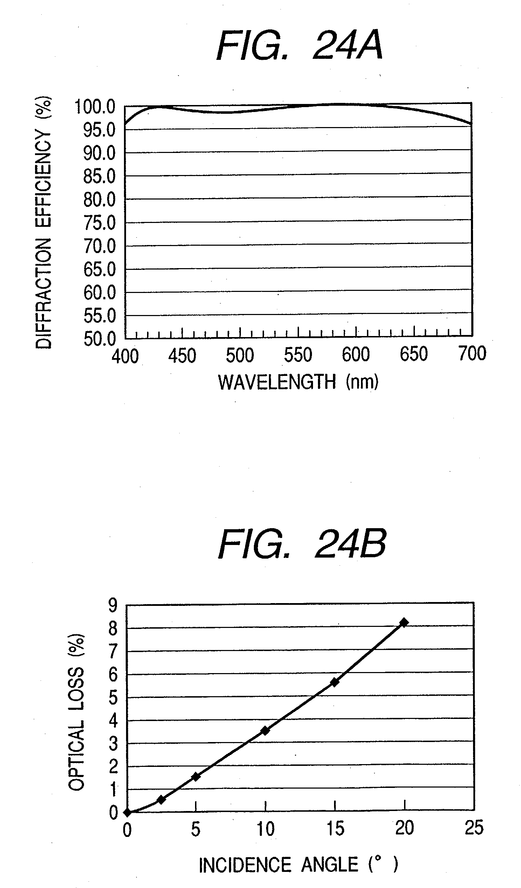

FIG. 24A is a graph showing a first-order diffraction light intensity at an incidence angle of 0 degree corresponding to each wavelength for the manufactured laminated diffraction optical element 110. The abscissa axis shows a wavelength. The ordinate axis shows a diffraction efficiency. FIG. 24A shows the diffraction efficiency of 95% or more against the first-order diffraction light between wavelengths 400 and 700 nm as an available wavelength area. Accordingly, it is possible to assume that the laminated diffraction optical element 110 indicates the distribution of wavelengths with good intensities in the available wavelength area.

FIG. 24B is a graph showing a decreasing rate of the first-order diffraction light intensity at changed incidence angles. The abscissa axis shows an incidence angle. The ordinate axis shows an optical loss factor.- As the incidence angle increases, the loss factor increases. FIG. 24B shows an optical loss factor of 3.52% at an incidence angle of 10 degrees. It is possible to assume that this value indicates a very good characteristic. Accordingly, it is possible to assume that the laminated diffraction optical element 110 according to the embodiment causes a light beam to concentrate on a specific order.

### Eleventh embodiment

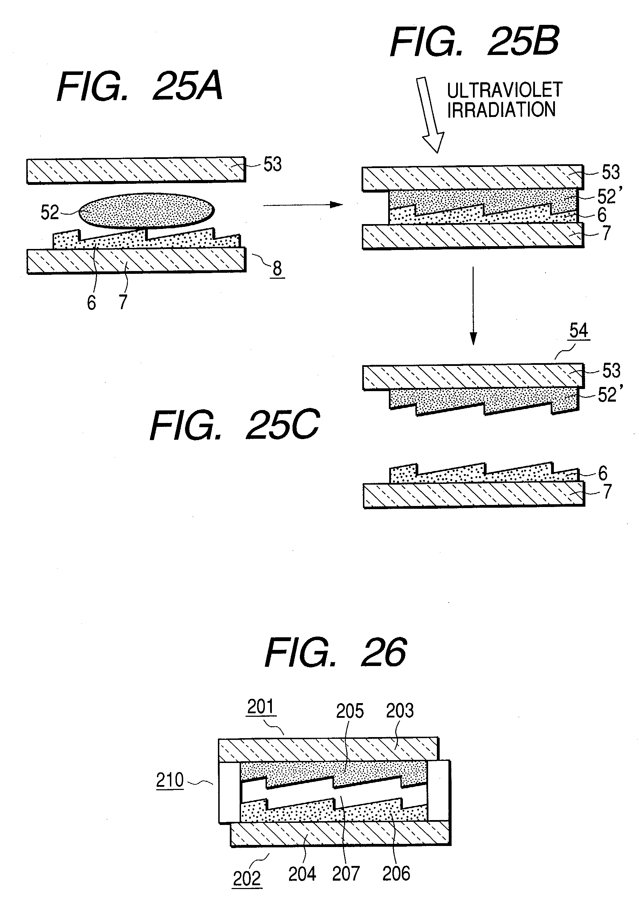

The eleventh embodiment of the present invention will now be described with reference to FIGS. 25A through 25C. The first to tenth embodiments use the metal mold to form the diffraction optical element, but the present invention is not limited thereto. Instead of the metal mold, the other diffraction optical element can be used as a mold for the laminated diffraction optical element as shown in FIG. 25A through 25C to mold the diffraction optical element comprising polyvinylcarbazole. The mutually corresponding parts in FIGS. 25A through 25C and FIGS. 12A through 12C are designated by the same reference numerals. FIGS. 25A through 25C differ from FIGS. 12A through 12C in that the metal mold 51 is replaced by the diffraction optical element 8 comprising the glass plate 7 and the photo-curing resin 6. This can accurately manufacture a diffraction optical element whose concavity and convexity are reverse to those of the diffraction optical element 8.

### Twelfth embodiment

The twelfth embodiment of the present invention will now be described with reference to FIG. 26. The first to tenth embodiments use polyvinylcarbazole to mold the diffraction optical element in contact with the glass substrate, but the present invention is not limited to such configuration. FIG. 26 shows a multilayer diffraction optical element by combining two diffraction optical elements 201 and 202 opposed to each other.

The diffraction optical elements 201 and 202 comprise photo-curing resins (nd = 1.636, νd = 22.8) 205 and 206 molded on glass substrates 203 and 204, respectively. Polyvinylcarbazole 207 is filled in between the diffraction optical elements 201 and 202. Both diffraction optical elements 201 and 202 are used as molds to transfer the diffractive shape to N-vinylcarbazole. In this manner, the 3-layer laminated diffraction optical element 210 can be manufactured to be able to comply with more complicated optical designs.

### Thirteenth embodiment

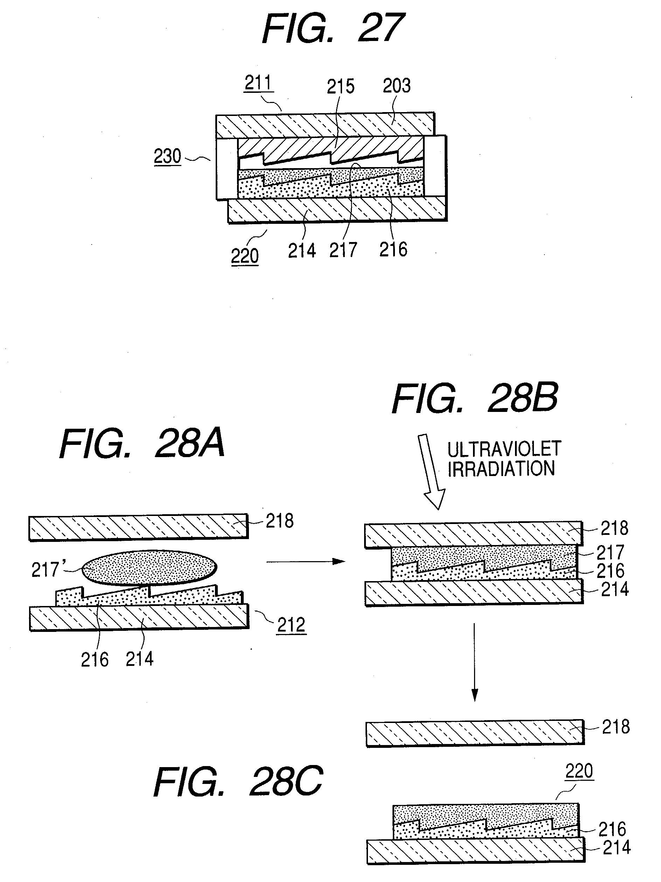

The thirteenth embodiment of the present invention will now be described with reference to FIGS. 27 and 28A through 28C. According to the embodiment, the diffractive shape of the photo-curing resin 206 according to the twelfth embodiment is filled with polyvinylcarbazole 217 as shown in FIG. 27. After the flattened laminated diffraction optical elements 201 and 202 are molded, the diffraction optical element 202 is used as a mold to mold the polyvinylcarbazole 217.

FIGS. 28A through 28C show how to mold the polyvinylcarbazole 217. In FIG. 28A, fluid N-vinylcarbazole 217' is supplied to a diffraction optical element 212 comprising a glass (BK7) plate 214 and a photo-curing resin 216. A glass (BK7) plate 218 is placed thereon to perform molding as shown in FIG. 28B. Thereafter, as shown in FIG. 28C, the cured polyvinylcarbazole 217 is separated from the glass plate 218 to manufacture a diffraction optical element 202 having a flat surface.

As shown in FIG. 23, an antireflection film is formed on a diffraction surface of a diffraction optical element 211 comprising a glass (BK7) plate 213 and a photo-curing resin 215 and the diffraction optical element 220. As shown in FIG. 27, the diffraction optical elements 211 and 220 are combined so that the corresponding diffraction gratings become opposed to each other to manufacture a laminated diffraction optical element 230 comprising three layers. Since the multilayer diffraction optical element 230 can be manufactured in this manner, it becomes possible to comply with more complicated optical designs and easily mold laminated diffraction optical element having three or more layers.

The diffraction optical element according to the embodiment comprises one to three layers. However, the present invention is not limited thereto and may be applicable to a laminated diffraction optical element having four or more layers.

The diffraction optical element according to the embodiment can also configure optical systems such as photography and projection optical systems in combination with the other optical elements such as a lens. These optical systems can be used to configure an image-forming apparatus that forms images on photo conductors such as silver halide films, CCD, and the like.

The optical element according to the embodiment concerns a diffraction optical element having a diffractive shape. However, the present invention is not limited thereto and may be applicable to any optical elements that have fine shapes representing specific optical performance.

The diffraction optical element according to the present invention uses polyvinylcarbazole having a large refractive index dispersion as an optical material. Even if an incidence angle increases, the diffraction optical element can prevent occurrence of flare or ghost, decrease light losses, and suppress chromatic aberration. It is also possible to decrease the total thickness of the diffraction grating.

N-vinylcarbazole mainly comprising fluid monomer is spread into the metal mold and is polymerized therein. This enables the use of fragile polyvinylcarbazole as a material for diffraction optical elements. Consequently, it is possible to easily and accurately manufacture the diffraction optical element comprising polyvinylcarbazole even if the diffraction grating is finely and complexly shaped.

When the diffraction optical element is manufactured according to thermal polymerization, N-vinylcarbazole added with a thermal polymerization initiator can be used as a raw material for thermal polymerization. This makes it possible to keep the heating temperature low and shorten the heating time.

When the diffraction optical element is manufactured according to photopolymerization, N-vinylcarbazole added with a photopolymerization initiator can be used as a raw material for photopolymerization. This makes it possible to greatly shorten the irradiation time.

As a raw material for polymerization, there is added a compound having two or more unsaturated ethylene radicals. As a result, it is possible to obtain the molded material that is optically transparent and is free from solvent crack or surface deformation due to resistance to high temperature.

## Claims

1. A method of manufacturing an optical element, comprising at least the steps of:
supplying powder polyvinylcarbazole (2) to a mold (1); and
curing the polyvinylcarbazole using the mold by means of thermoplastic molding.

2. A method of manufacturing an optical element, comprising at least the steps of:
supplying a mold (31) with polyvinylcarbazole (32) dissolved in a solvent; and
curing the polyvinylcarbazole by evaporating the solvent in the mold.

3. A method of manufacturing an optical element, comprising at least the steps of:
supplying a mold (41, 51) with a material (42, 52) mainly comprising N-vinylcarbazole; and
curing the N-vinylcarbazole in the mold by means of polymerization reaction to convert it into polyvinylcarbazole.

4. The method of manufacturing an optical element according to claim 3, wherein
the optical element is a diffraction optical element.

5. The method of manufacturing an optical element according to claim 3 or claim 4, wherein
the polymerization reaction is thermal polymerization and the material contains a thermal initiator.

6. The method of manufacturing an optical element according to claim 5, wherein
the thermal polymerization is performed through heat treatment at a temperature of not lower than 70°C and not higher than 130°C.

7. The method of manufacturing an optical element according to claim 3 or claim 4, wherein
the polymerization reaction is photopolymerization and the material contains a photoinitiator.

8. The method of manufacturing an optical element according to claim 7, wherein
the photoinitiator comprises a radical polymerization initiator capable of generating radical species by means of irradiation using ultraviolet light or visible light.

9. The method of manufacturing an optical element according to claim 7 or claim 8, wherein
the photoinitiator comprises 1-hydroxycyclohexyl-phenyl-ketone.

10. The method of manufacturing an optical element according to any one of claims 7 to 9, wherein
the material contains a compound having two or more unsaturated ethylene groups.

11. The method of manufacturing an optical element according to claim 10, wherein
the compound having two or more unsaturated ethylene groups is divinylbenzene.

12. The method of manufacturing an optical element according to claim 10 or claim 11, wherein
the compound having two or more unsaturated ethylene groups is contained at a weight ratio ranging from 0.5 wt% to 2.5 wt%.

13. A method of manufacturing an optical element, comprising the steps of:
supplying a material (42, 52) mainly comprising fluid N-vinylcarbazole to a mold (41, 51) having a diffractive shape;
curing the N-vinylcarbazole in the mold by means of polymerization reaction to convert it into polyvinylcarbazole (42', 52'); and
separating the cured polyvinylcarbazole from the mold.

14. An optical element (44, 45) manufactured by the method of manufacturing an optical element according to claim 13.

15. A method of manufacturing a laminated diffraction optical element, comprising the steps of:
supplying a material (42, 52) mainly comprising fluid N-vinylcarbazole to a mold (41, 51) having a diffractive shape;
curing the N-vinylcarbazole in the mold by means of polymerization reaction to convert it into polyvinylcarbazole (42', 52'), thereby providing a diffraction optical element (44, 54); and
combining the diffraction optical element with another diffraction optical element (8) so that their diffraction surfaces are opposed to each other.

16. A laminated diffraction optical element manufactured by the method of manufacturing a laminated diffraction optical element according to claim 15.

17. The laminated diffraction optical element according to claim 16, wherein
the refractive index dispersion of one of the diffraction optical elements is higher than that of the other diffraction optical element.

18. A method of manufacturing a laminated diffraction optical element, comprising the steps of:
supplying a curable resin (6) to a mold (5) having a diffractive shape;
curing the curable resin in the mold;
separating the cured resin from the mold to provide a diffraction optical element (8);
supplying a material (42, 52) mainly comprising fluid N-vinylcarbazole to the diffraction optical element; and
curing the N-vinylcarbazole in the diffraction optical element by means of polymerization reaction to convert it into polyvinylcarbazole (42', 52').

19. A laminated diffraction optical element manufactured by the method of manufacturing a laminated diffraction optical element according to claim 18.

20. A method of manufacturing a laminated diffraction optical element, comprising the steps of:
supplying a curable resin (205, 206) to first and second molds having diffractive shapes;
curing the curable resin in the first and second molds;
separating the cured resin from the first and second molds to provide first and second diffraction optical elements (201, 202);
arranging the first and second diffraction optical elements with their diffraction surfaces opposed to each other and supplying a material mainly comprising N-vinylcarbazole (207) therebetween; and
curing the N-vinylcarbazole in the first and second diffraction optical elements by means of polymerization reaction to convert it into polyvinylcarbazole.

21. An optical element manufactured by the method of manufacturing an optical element according to claim 20.

22. A method of manufacturing a laminated diffraction optical element, comprising the steps of:
supplying a curable resin (216) to a mold having a diffractive shape;
curing the curable resin in the mold;
separating the cured resin from the mold to provide a diffraction optical element (212);
supplying the diffraction optical element with a material mainly comprising fluid N-vinylcarbazole (217'); and
curing the N-vinylcarbazole in the diffraction optical element by means of polymerization reaction to convert it into polyvinylcarbazole (217), wherein the polyvinylcarbazole fills the diffractive shape of the diffraction optical element and has a flattened surface; and
combining the diffraction optical element with another diffraction optical element (211) so that their diffraction surfaces are opposed to each other.

23. A laminated diffraction optical element manufactured by the method of manufacturing a laminated diffraction optical element according to claim 22.

24. An optical material for molding an optical element, comprising:
thermally polymerizable, fluid N-vinylcarbazole; and
a thermal initiator.

25. An optical material for molding an optical element, comprising:
photopolymerizable, fluid N-vinylcarbazole; and
a photoinitiator.

26. The optical material for molding an optical element according to claim 25, wherein
the photoinitiator comprises a radical polymerization initiator capable of generating radical species by irradiation of ultraviolet light or visible light.

27. The optical material for molding an optical element according to claim 25 or claim 26, wherein
the photoinitiator comprises 1-hydroxycyclohexyl-phenyl-ketone.

28. The optical material for molding an optical element according to any one of claims 25 to 27, further comprising:
a compound having two or more unsaturated ethylene groups.

29. The optical material for molding an optical element according to claim 28, wherein
the compound having two or more unsaturated ethylene groups is divinylbenzene.

30. The optical material for molding an optical element according to claim 28 or claim 29, wherein
the compound having two or more unsaturated ethylene groups is contained at a weight ratio ranging from 0.5 wt% to 2.5 wt%.
